# EUROPÄISCHE PATENTSCHRIFT

(11) **EP 1 112 191 B1**
(45) Veröffentlichungstag und Bekanntmachung des Hinweises auf die Patenterteilung: **06.11.2002**
(21) Anmeldenummer: 99953602.2
(22) Anmeldetag: 26.08.1999
(51) Int. Cl.: B60H 1/00, F01P 9/06

(54) **VORRICHTUNG ZUR WÄRMEABLEITUNG AN EINEM KRAFTFAHRZEUG**
DEVICE FOR DISSIPATING HEAT IN A MOTOR VEHICLE
DISPOSITIF DISSIPATEUR DE CHALEUR POUR VEHICULE

(30) Priorität: 29.08.1998 DE 19839477
(43) Veröffentlichungstag der Anmeldung: 04.07.2001
(73) Patentinhaber: ROBERT BOSCH GMBH, 70442 Stuttgart (DE)
(72) Erfinder: HESSE, Ullrich, D-71563 Affalterbach (DE)
(86) Internationale Anmeldenummer: DE9902669
(87) Internationale Veröffentlichungsnummer: WO00012333

(56) Entgegenhaltungen:
- EP-A- 0 484 548
- DE-A- 3 442 350
- DE-A- 19 542 125
- US-A- 5 549 153

## Beschreibung

### Stand der Technik

Die Erfindung geht aus von einer Vorrichtung zur Wärmeableitung in einem Kraftfahrzeug nach der Gattung der unabhängigen Ansprüche.

Aus der DE 34 42 350 C2 ist bereits ein Wärmeaustauschsystem für die Heizung eines Strassenfahrzeuges mit Elektroantrieb bekannt. Zur Kühlung der Leistungshalbleiter des Elektroantriebes ist ein separater Kühlkreislauf vorgesehen, dessen Flüssigkeit durch die Verlustleistung der Halbleiter erwärmt und durch den Kühler über Schläuche in die Heizung des Fahrraumes gepumpt wird. Zur Gewährleistung einer ausreichenden Kühlung muß hierbei ein hinreichend großer Massenstrom zur Verfügung gestellt und umgepumpt werden.

Aus der gattungsbildenden EP 0 484 548 A1 ist ein elektrisch betriebenes Kraftfahrzeug bekannt, dessen Räder jeweils von einem Elektromotor angetrieben sind. Die Abwärme der Leistungselektronik dieser Elektromotoren wird durch einen Kühlkreislauf abgeführt, der in eine Klimaanlage für die Fahrzeuginsassen integriert ist. Der die Verlustwärme freisetzende Elektromotor wirkt dabei selbst als Wärmetauscher und Verdampfer, der das Kältemittel in einen gasförmigen Zustand überführt. In diesem Zustand wird das Kältemittel dann einem Kompressor der Klimaanlage der EP 0 484 548 A1 zugeführt.

### Vorteile der Erfindung

Die erfindungsgemäße Vorrichtung zur Wärmeableitung in einem Kraftfahrzeug weist ein in dem Kraftfahrzeug angeordnetes Bauteil auf, das bei Betrieb Verlustwärme freisetzt. Die Verlustwärme des Bauteils wird über einen mit einem Kühlmittel durchströmten Kühlkreislauf abgeführt. In dem Kühlkreislauf ist ein Verflüssiger und ein Wärmetauscher vorgesehen, wobei der Wärmetauscher als Verdampfer betrieben werden kann, so dass wegen der hohen Verdampfungsentalpie der zur Kühlung des Bauteils notwendige Massenstrom des Kühlmittels gering sein kann. Zweckmäßigerweise ist der Verflüssiger in einem Kühlkreislauf einer Klimaanlage angeordnet. Im Kühlkreislauf ist eine erste Verzweigung vorgesehen, so dass ein erster Massenstrom des Kühlmittels dem ersten Wärmetauscher und ein zweiter Massenstrom des Kühlmittels einen zweiten Wärmetauscher zugeführt ist.

In vorteilhafter Weise ist zwischen der ersten Verzweigung des Kühlkreislaufs und dem ersten Wärmetauscher eine Pumpe angeordnet. Diese separate Pumpe für den Kühlkreislauf des verlustbehafteten Bauteils gewährleistet einen zuverlässigen Massenstrom durch den Wärmetauscher, so dass die Verlustwärme des Bauteils in gewünschter Weise abgeführt werden kann. Im Speziellen kann die Pumpe in Abhängigkeit von der erfassten Temperatur des verlustbehafteten Bauteils, beispielsweise einer Leistungselektronik, angesteuert werden, so dass die ausreichende Abführung der Verlustwärme sichergestellt ist.

In einer Weiterbildung der erfindungsgemäßen Vorrichtung ist eine zweite Verzweigung im Kühlkreislauf vorgesehen, die den ersten und zweiten Massenstrom des Kühlmittels zusammenführt. Diese zweite Verzweigung ist in vorteilhafter Weise zwischen dem Verflüssiger und dem Verdichter angeordnet. Eine derartige Anordnung erlaubt den Verzicht auf eine zusätzliche Pumpe für den ersten Massenstrom durch den ersten Wärmetauscher.

Der erste Wärmetauscher, beispielsweise die Leistungselektronik eines verlustbehafteten Bauteils, kann in vorteilhafter Weise über ein Expansionsmittel, beispielsweise in Form eines thermostatischen Expansionventils, gespeist werden und saugseitig mit dem Verdichter verbunden sein. Insbesondere ist es in dieser Anordnung der erfindungsgemäßen Vorrichtung möglich, das Kältemittel CO₂ zum Einsatz zu bringen.

In einer weiteren vorteilhaften Ausführungsform der erfindungsgemäßen Vorrichtung ist ein Verdichter mit Zwischendruckanzapfung im Kühlkreislauf des Bauteils vorgesehen, dem der erste Massenstrom zugeführt wird. Dadurch läßt sich der Kühlkreislauf durch den ersten Wärmetauscher auf ein mittleres Druckniveau bringen, bei dem ein niedrigeres Temperaturniveau erreicht werden kann. Dieses niedrigere Temperaturniveau ist für die Auslegung des ersten Wärmetauschers und die Dimensionierung des notwendigen Massenstroms vorteilhaft.

Weitere vorteilhafte Ausgestaltungen ergeben sich aus den Figuren und der zugehörigen Beschreibung.

### Zeichnung

Drei Ausführungsbeispiele der Erfindung sind in der Zeichnung dargestellt und werden im Folgenden näher beschrieben.

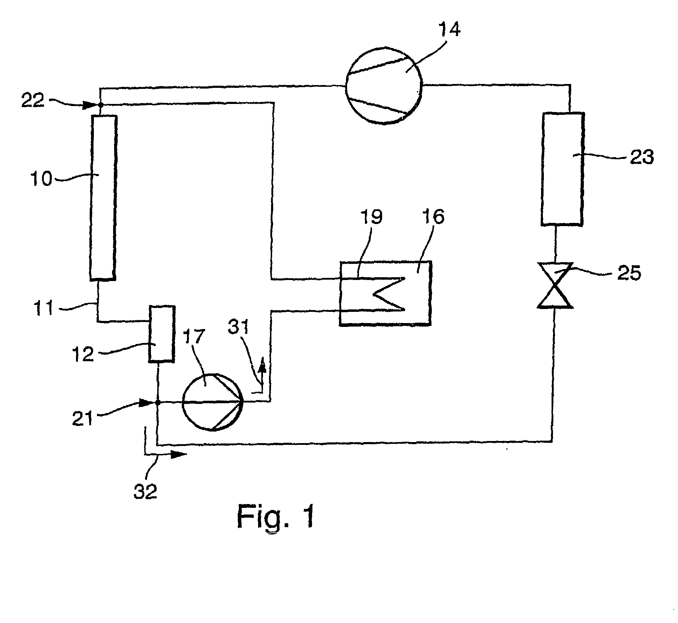

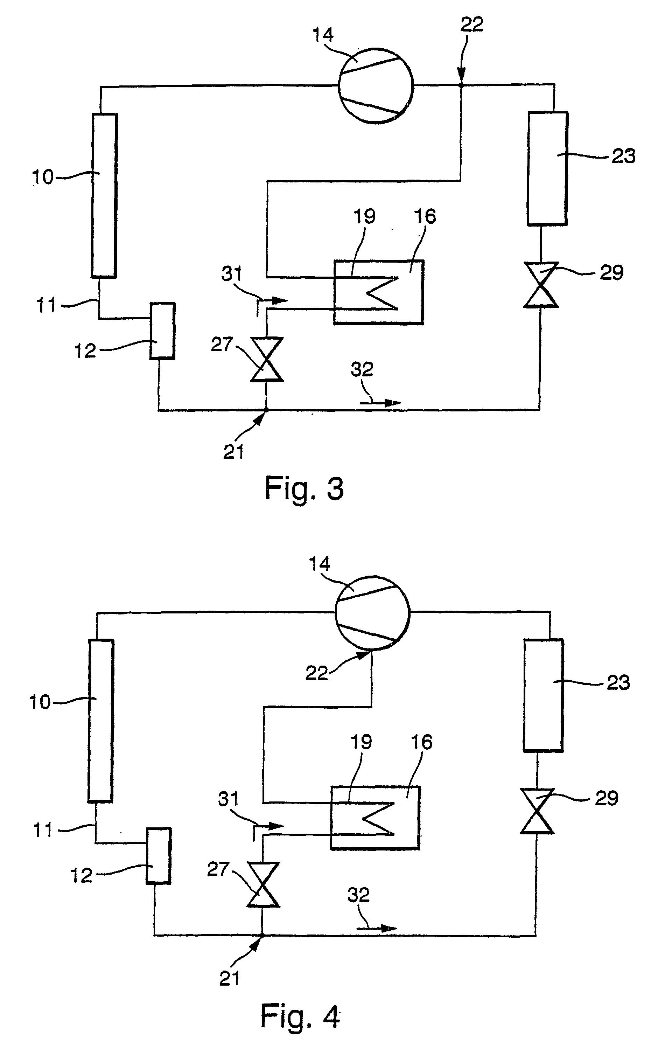

Es zeigen Figur 1,3,4 (die ursprüngliche Figur 2 wurde entfernt) Blockschaltbilder unterschiedlicher Ausführungsbeispiele der erfindungsgemäßen Vorrichtung.

Figur 1 zeigt einen Verflüssiger 10, der ein in einem Kühlkreislauf 11 zirkulierendes Kühlmittel 11 verflüssigt. Nach der Verflüssigung gelangt das Kühlmittel in einen Flüssigkeitssammler 12. Der Kühlkreislauf 11 verzweigt sich an einer ersten Verzweigung 21 in einen ersten Massenstrom 31 und einen zweiten Massenstrom 32. Der erste Massenstrom 31 wird von einer Pumpe 17 zu einem ersten Wärmetauscher 19 gefördert, dem eine Leistungselektronik 16 Wärme zuführt. Der zweite Massenstrom 32 gelangt über ein Expansionsmittel 25 zu einem zweiten Wärmetauscher 23 und wird anschließend dem Verdichter 14 zugeleitet. An einer zweiten Verzweigung 22 werden erster und zweiter Massenstrom 31,32 wieder zusammengeführt. Die zweite Verzweigung 22 ist zwischen dem Verdichter 14 und dem Verflüssiger 10 angeordnet.

Das in dem Kühlkreislauf 11 zirkulierende Kühlmittel wird gemäß Figur 3 in dem Verflüssiger 10 verflüssigt und anschließend dem Flüssigkeitssammler 12 zugeführt. An der ersten Verzweigung 21 fließt der erste Massenstrom 31 über das erste Expansionsmittel 27 dem ersten Wärmetauscher 19 zu, der von der Leistungselektronik 16 beheizt wird. Nach der
ersten Verzweigung 21 gelangt der zweite Massenstrom 32 über ein zweites Expansionsmittel 29 in den zweiten Wärmetauscher 23. Die zweite Verzweigung 22 führt die beiden Massenströme 31, 32 zwischen Verdichter 14 und zweitem Wärmetauscher 23 wieder zusammen.

Das Ausführungsbeispiel gemäß Figur 4 unterscheidet sich von demjenigen gemäß Figur 3 nur darin, daß als Verdichter 14 ein Verdichter mit Zwischendruckanzapfung verwendet ist. So wird der dem ersten Wärmetauscher 19 entweichende erste Massenstrom 31 direkt dem Verdichter 14 zugeführt.

Die Leistungselektronik 16 ist als ein verlustwärmeabgebendes Bauteil im Sinne der Anspruchsformulierung anzusehen. Im Kraftfahrzeug dient die Leistungselektronik 16 z. B. der Regelung der Antriebe von Wasserpumpen, Motorkühlgebläsen, Klimakompressoren und Starter/Generatoren. Erfindungsgemäß ist vorgesehen, die beim Betrieb entstehende Verlustwärme der Leistungselektronik 16 mit Hilfe eines ersten Wärmetauschers 19 abzuführen, die dieser bei einem Betrieb des ersten Wärmetauschers als Verdampfer zur Verdampfung benötigt. Dieser erste Wärmetauscher 19 ist beispielsweise zur Verdampfung ausgelegt. Die Verdampfung kann in dafür vorgesehenen Kanälen und Leitungen, die in unmittelbarer Nähe zu der Leistungselektronik 16 angeordnet sind, oder gegebenenfalls direkt im druckfesten Gehäuse der Leistungselektronik 16 selbst erfolgen. Die Anforderungen an diesen ersten Wärmetauscher 19 hängen von dem verwendeten Kühlmittel ab, in jedem Fall notwendig ist eine druckfeste, von der Luft abgeschlossene Ausführung. Als Kühlmittel ist beispielsweise das für die Klimaanlage eines Fahrzeugs verwendete vorzusehen. Bei dem Ausführungsbeispiel gemäß Figur 3 und bei niedrigem Mitteldruck auch Fig.4, kann der Prozess mit CO₂ als Kühlmittel betrieben werden.

Bei dem Ausführungsbeispiel gemäß Figur 1 ist der erste Wärmetauscher 19 in eine herkömmliche Klimaanlage, bestehend aus Verflüssiger 10, Flüssigkeitssammler 12, zweitem Wärmetauscher 23 und Verdichter 14, integriert. Zur Förderung des ersten Massenstroms 31 ist eine Pumpe 17 vorgesehen. Der erste Massenstrom 31 verdampft in etwa auf dem Druck- und Temperaturniveau des Verflüssigers 10 unter Wärmeaufnahme der Leistungselektronik 16. Je nach aufzunehmender Wärmeverlustleistung der Leistungselektronik 16 verteilen sich die Massenströme 31,32. Bei einer Leistung des ersten Wärmetauschers 19 von 1kW und der Leistung des zweiten Wärmetauschers 23 zur Fahrzeugklimatisierung von 7kW ergibt sich ein Verhältnis von erstem zu zweitem Massenstrom 31,32 von 1:7.

Die Pumpe 17 kann in Abhängigkeit von der erfassten Temperatur der Leistungselektronik 16 angesteuert werden. Bei einer für die Leistungselektronik 16 kritischen Temperatur ist der Durchsatz des ersten Massenstroms 31 zu erhöhen, um in ausreichendem Maße die Abführung der Verlustwärme sicherzustellen.

Die Anordnung gemäß Figur 3 erlaubt den Verzicht auf die Pumpe 17, indem der erste Wärmetauscher 19 der Leistungselektronik 16 über das erste Expansionsmittel 27, beispielsweise ein thermostatisches Expansionsventil, gespeist wird und saugseitig an den Verdichter 14 angeschlossen ist. Zwar ist mit erhöhter Leistungsaufnahme des Verdichters 14 zu rechnen, allerdings können in dem als Verdampfer betriebenen ersten Wärmetauscher 19 wegen der erreichbaren Druckverhältnisse niedrige Verdampfungstemperaturen erzielt werden. Auch CO₂ könnte als Kältemittel bei dieser Anordnung zum Einsatz kommen.

Bei dem Ausführungsbeispiel gemäß Figur 4 ist als Verdichter 14 ein zweistufiger oder ein für eine Zwischendruckanzapfung geeigneter Verdichter 14, zum Beispiel ein sogenannter Scroll-Verdichter vorgesehen. Das Druckniveau bewegt sich zwischen demjenigen des Ausführungsbeispiels gemäß Figur 3 und demjenigen des Ausführungsbeispiels gemäß Figur 1. Eine Pumpe 17 zur Förderung des ersten Massenstroms 31 ist nicht notwendig.

Die Anwendung ist nicht eingeschränkt auf den Einsatz im Kraftfahrzeug. Sie kann über all da zum Einsatz gelangen, wo eine zuverlässige Abführung von Abwärme notwendig ist.

Die Verlustwärme kann auch bei dem mechanischen Betrieb von Bauteilen anfallen.

Besonders vorteilhaft sind die Ausführungen nach Fig. 3 und Fig. 4 im Zusammenhang mit außengeregelten, kupplungslosen Klimakompressoren sein.

## Patentansprüche

1. Vorrichtung zur Wärmeableitung in einem Kraftfahrzeug, mit einem Bauteil (16), das bei Betrieb Verlustwärme freisetzt, mit einem von einem Kühlmittel durchströmten Kühlkreislauf (11), der die Verlustwärme des Bauteils (16) abführt, wobei in dem Kühlkreislauf (11) ein Verflüssiger (10) und ein erster Wärmetauscher (19) in räumlicher Nähe zu dem Bauteil (16) in der Weise angeordnet ist, dass die Verlustwärme des Bauteils (16) dem ersten Wärmetauscher (19) zugeführt ist, wobei der Verflüssiger (10) in einem Kühlkreislauf (11) einer Klimaanlage angeordnet ist, wobei in dem Kühlkreislauf (11) eine erste Verzweigung (21) vorgesehen ist, so dass ein erster Massenstrom (31) des Kühlmittels dem ersten Wärmetauscher (19), und ein zweiter Massenstrom (32) des Kühlmittels einem zweiten Wärmetauscher (23) zugeführt ist, **dadurch gekennzeichnet, dass** zwischen erster Verzweigung (21) und erstem Wärmetauscher (19) eine Pumpe (17) angeordnet ist.

2. Vorrichtung zur Wärmeableitung in einem Kraftfahrzeug, mit einem Bauteil (16), das bei Betrieb Verlustwärme freisetzt, mit einem von einem Kühlmittel durchströmten Kühlkreislauf (11), der die Verlustwärme des Bauteils (16) abführt, wobei in dem Kühlkreislauf (11) ein Verflüssiger (10) und ein erster Wärmetauscher (19) in räumlicher Nähe zu dem Bauteil (16) in der Weise angeordnet ist, dass die Verlustwärme des Bauteils (16) dem ersten Wärmetauscher (19) zugeführt ist, wobei der Verflüssiger (10) in einem Kühlkreislauf (11) einer Klimaanlage angeordnet ist, wobei in dem Kühlkreislauf (11) eine erste Verzweigung (21) vorgesehen ist, so dass ein erster Massenstrom (31) des Kühlmittels dem ersten Wärmetauscher (19), und ein zweiter Massenstrom (32) des Kühlmittels einem zweiten Wärmetauscher (23) zugeführt ist, **dadurch gekennzeichnet, dass** die eine zweite Verzweigung (22) zwischen dem Verflüssiger (10) und einem Verdichter (14) angeordnet ist.

3. Vorrichtung zur Wärmeableitung in einem Kraftfahrzeug, mit einem Bauteil (16), das bei Betrieb Verlustwärme freisetzt, mit einem von einem Kühlmittel durchströmten Kühlkreislauf (11), der die Verlustwärme des Bauteils (16) abführt, wobei in dem Kühlkreislauf (11) ein Verflüssiger (10) und ein erster Wärmetauscher (19) in räumlicher Nähe zu dem Bauteil (16) in der Weise angeordnet ist, dass die Verlustwärme des Bauteils (16) dem ersten Wärmetauscher (19) zugeführt ist, wobei der Verflüssiger (10) in einem Kühlkreislauf (11) einer Klimaanlage angeordnet ist, wobei in dem Kühlkreislauf (11) eine erste Verzweigung (21) vorgesehen ist, so dass ein erster Massenstrom (31) des Kühlmittels dem ersten Wärmetauscher (19), und ein zweiter Massenstrom (32) des Kühlmittels einem zweiten Wärmetauscher (23) zugeführt ist, **dadurch gekennzeichnet, dass** ein Verdichter (14) mit Zwischendruckanzapfung vorgesehen ist, dem der erste Massenstrom (31) zugeführt ist.

## Claims

1. Device for heat dissipation in a motor vehicle, with a component (16) which releases lost heat during operation, and with a cooling circuit (11) through which a coolant flows and which discharges the lost heat of the component (16), a condenser (10) and a first heat exchanger (19) being arranged in the cooling circuit (11) in spatial proximity to the component (16), in such a way that the lost heat of the component (16) is fed to the first heat exchanger (19), the condenser (10) being arranged in a cooling circuit (11) of an air-conditioning system, a first branch (21) being provided in the cooling circuit (11), so that a first mass flow (31) of the coolant is fed to the first heat exchanger (19) and a second mass flow (32) of the coolant is fed to a second heat exchanger (23), **characterized in that** a pump (17) is arranged between the first branch (21) and the first heat exchanger (19).

2. Device for heat dissipation in a motor vehicle, with a component (16) which releases lost heat during operation, and with a cooling circuit (11) through which a coolant flows and which discharges the lost heat of the component (16), a condenser (10) and a first heat exchanger (19) being arranged in the cooling circuit (11) in spatial proximity to the component (16), in such a way that the lost heat of the component (16) is fed to the first heat exchanger (19), the condenser (10) being arranged in a cooling circuit (11) of an air-conditioning system, a first branch (21) being provided in the cooling circuit (11), so that a first mass flow (31) of the coolant is fed to the first heat exchanger (19) and a second mass flow (32) of the coolant is fed to a second heat exchanger (23), **characterized in that** a second branch (22) is arranged between the condenser (10) and a compressor (14).

3. Device for heat dissipation in a motor vehicle, with a component (16) which releases lost heat during operation, and with a cooling circuit (11) through which a coolant flows and which discharges the lost heat of the component (16), a condenser (10) and a first heat exchanger (19) being arranged in the cooling circuit (11) in spatial proximity to the component (16), in such a way that the lost heat of the component (16) is fed to the first heat exchanger (19), the condenser (10) being arranged in a cooling circuit (11) of an air-conditioning system, a first branch (21) being provided in the cooling circuit (11), so that a first mass flow (31) of the coolant is fed to the first heat exchanger (19) and a second mass flow (32) of the coolant is fed to the first heat exchanger (19) and a second mass flow (32) of the coolant is fed to a second heat exchanger (23), **characterized in that** a compressor (14) which has intermediate pressure tapping and to which the first mass flow (31) is fed is provided.

## Revendications

1. Dispositif pour évacuer la chaleur dans un véhicule automobile, comprenant un composant (16) dégageant de la chaleur dans son fonctionnement, un circuit de refroidissement (11) traversé par un agent de refroidissement qui évacue la chaleur dégagée par le composant (16),
le circuit de refroidissement (11) comportant un condenseur (10) et un premier échangeur de chaleur (19) à proximité immédiate du composant (16) de façon que le premier échangeur de chaleur (19) reçoive la chaleur dégagée par le composant (16),
le condenseur (10) étant installé dans un circuit de refroidissement (11) d'une installation de climatisation, ce circuit de refroidissement (11) comportant une première dérivation (21) de façon qu'un premier débit massique (31) de l'agent de refroidissement arrive dans le premier échangeur de chaleur (19) et qu'un second débit massique (32) de l'agent de refroidissement arrive dans un second échangeur de chaleur (23),
**caractérisé par**
une pompe (17) installée entre la première dérivation (21) et le premier échangeur de chaleur (19).

2. Dispositif pour évacuer la chaleur dégagée dans un véhicule automobile, comprenant un composant (16) qui dégage de la chaleur pendant son fonctionnement, un circuit de refroidissement (11) traversé par un agent de refroidissement pour évacuer la chaleur dégagée par le composant (16),
le circuit de refroidissement (11) ayant un condenseur (10) et un premier échangeur de chaleur (19), ce dernier étant à proximité immédiate du composant (16) pour recevoir la chaleur dégagée par le composant (16),
le condenseur (10) étant intégré dans un circuit de refroidissement (11) d'une installation de climatisation, ce circuit de refroidissement (11) ayant une première dérivation (21) de façon à avoir un premier débit massique (31) d'agent de refroidissement pour le premier échangeur de chaleur (19) et un second débit massique (32) d'agent de refroidissement pour un second échangeur de chaleur (23),
**caractérisé par**
un second embranchement (22) entre le condenseur (10) et un compresseur (14).

3. Dispositif pour évacuer la chaleur d'un véhicule automobile, comportant un composant (16) qui dégage de la chaleur pendant son fonctionnement, un circuit de refroidissement (11) traversé par un agent de refroidissement qui évacue la chaleur dégagée par le composant (16),
le circuit de refroidissement (11) comportant un condenseur (10) et un premier échangeur de chaleur (19), ce dernier étant à proximité immédiate du composant (16) de façon à ce que la chaleur dégagée par le premier composant (16) arrive dans le premier échangeur de chaleur (19), le condenseur (10) étant installé dans un circuit de refroidissement (11) d'une installation de climatisation, ce circuit de refroidissement (11) ayant une première dérivation (21) de façon qu'un premier débit massique (31) d'agent de refroidissement soit fourni au premier échangeur de chaleur (19) et un second débit massique (32) d'agent de refroidissement soit fourni à un second échangeur de chaleur (23),
**caractérisé par**
un compresseur (14) avec une prise de pression intermédiaire recevant le premier débit massique (31).
